# EUROPÄISCHE PATENTSCHRIFT

(11) **EP 1 669 793 B1**
(45) Veröffentlichungstag und Bekanntmachung des Hinweises auf die Patenterteilung: **09.01.2008**
(21) Anmeldenummer: 05024687.5
(22) Anmeldetag: 11.11.2005
(51) Int. Cl.: G02C 1/08

(54) **Brille, insbesondere Arbeitsschutzbrille**
Spectacles, especially working safety glasses
Lunettes, notamment lunettes protectrices du travail

(30) Priorität: 08.12.2004 DE 102004059023
(43) Veröffentlichungstag der Anmeldung: 14.06.2006
(73) Patentinhaber: Uvex Arbeitsschutz GmbH, 90766 Fürth (DE)
(72) Erfinder: Brück, Stefan, 90419 Nürnberg (DE)
(74) Vertreter: Schneck, Herbert

(56) Entgegenhaltungen:
- EP-A- 1 460 470
- WO-A-00/79333
- US-A- 2 551 144
- US-A- 5 500 694
- US-A- 6 086 199

## Beschreibung

Die Erfindung richtet sich auf eine Brille, insbesondere eine Arbeitsschutzbrille gemäß dem Oberbegriff von Anspruch 1. Eine gattungsgemäße Brille ist aus WO 00/79333 bekannt.

Eine andere derartige Brille ist aus der EP 1 460 470 A1 bekannt. Ein Nachteil dieser Brille besteht darin, dass die Entriegelung etwas mühsam handhabbar ist.

Zur Erzielung einer dauerhaft optimalen optischen Qualität der Sichtscheiben ist es vorteilhaft, diese nach einer gewissen Tragezeit durch neue ersetzen zu können. Weiterhin ist die Möglichkeit zum Auswechseln von Scheiben günstig, um die Scheiben den individuellen Wünschen und Bedürfnissen eines bestimmten Benutzers oder bestimmten Umgebungsverhältnissen anpassen zu können. Beispielsweise ist es in diesem Zusammenhang möglich, optisch bearbeitete Scheiben, getönte Scheiben oder Scheiben mit besonderen Oberflächenqualitäten einzusetzen. Diese Möglichkeit ist bei Sportbrillen von Vorteil und bei Arbeitsschutzbrillen besonders wichtig, wo die Rahmenkonstruktion aufgrund der erforderlichen Beschusssicherheit vergleichsweise aufwändig ist.

Es ist zu diesem Zweck bekannt, den Rahmen zu teilen, diesen zum Auswechseln der Scheiben elastisch aufzuweiten, neue Scheiben einzusetzen und dann den Teilungsbereich wiederum mit einer Verriegelung zu überbrücken.

Hiervon ausgehend liegt der Erfindung die Aufgabe zugrunde, eine Brille mit einer derartigen Verriegelungsmöglichkeit so auszugestalten, dass der Scheibenwechsel leicht handhabbar ist, dass das Design der Brille durch den Wechselmechanismus nicht beeinträchtigt wird und eine besonders zuverlässig haltbare Verriegelung geschaffen wird.

Diese Aufgabe wird erfindungsgemäß gelöst, durch die Merkmale des kennzeichnenden Teils von Anspruch 1.

Durch einen derartigen Schwenkriegel ist der Teilungsbereich hermetisch verschlossen und die mechanischen Teile am Bügelansatz sind nach außen hin vollständig abgedeckt, was sowohl ein positives ästhetisches Erscheinungsbild bedingt als auch den Wechselmechanismus gegen Verschmutzung, Beschuss und sonstige mechanische Beeinträchtigungen schützt. Das Funktionselement Schwenkriegel wird bei dieser Lösung zu einem Designelement. Ein weiterer Vorteil der erfindungsgemäßen Ausgestaltung besteht darin, dass die Scheiben einzeln auswechselbar sind.

Der Schwenkriegel kann durch die Stirnseite des Bügels einerseits axial festgelegt werden und andererseits durch eine Abstufung an der Verlängerung des oberen Rahmenteils beim Übergang in den Rahmen.

Der Schwenkriegel weist vorzugsweise an seiner Unterseite einen RastVorsprung auf, der im verriegelten Zustand die Unterseite des Bügelansatzes untergreift, wobei der Bügelansatz mit einem horizontalen Schlitz versehen sein kann.

Nachfolgend wird die Erfindung anhand eines bevorzugten Ausführungbeispiels in Verbindung mit der Zeichnung näher erläutert. Dabei zeigen:
- Fig. 1: eine perspektivische Darstellung einer erfindungsgemäßen Brille mit geschlossenem Schwenkriegel,
- Fig. 2: eine Fig. 1 entsprechende Darstellung mit geöffnetem Schwenkriegel,
- Fig. 3: eine Explosionsdarstellung des Verriegelungsbereiches und
- Fig. 4 bis 6: Schnitte durch den Schwenkriegel in verschiedenen Positionen desselben.

Eine in der Zeichnung dargestellte Brille 1 umfasst einen Rahmen 2 mit zwei Sichtöffnungen 3 und zwei Scheiben 4, die in umlaufende Nuten 5 der Sichtöffnungen 3 eingesetzt sind.

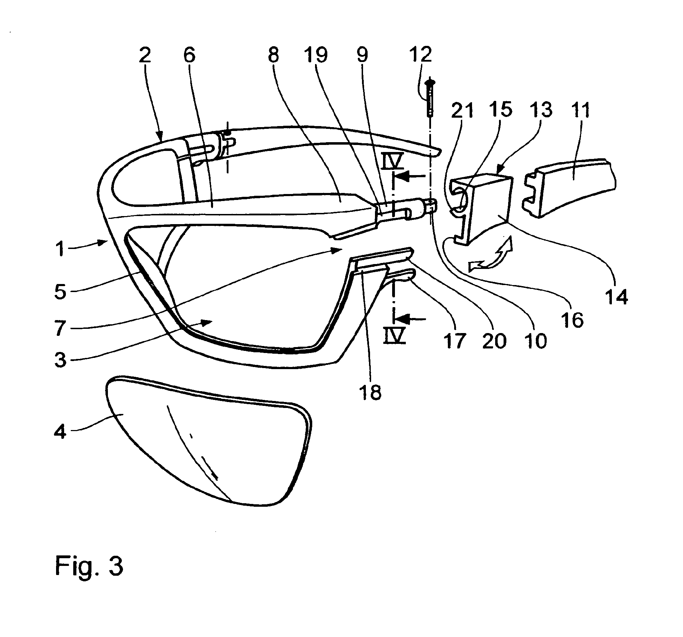

Der Rahmen 2 umfasst ein oberes Rahmenteil 6 und weist außenseitig unterhalb des oberen Rahmenteils 6 eine annähernd schräg-horizontale Teilung 7 auf, so dass er, wie in Fig. 3 dargestellt, zum Herausnehmen bzw. Einsetzen einer Scheibe 4 elastisch aufgeweitet werden kann.

Am rückwärtigen Ende 8 erstreckt sich eine annähernd zylinderförmige Verlängerung 9, die über eine Abstufung in das rückwärtige Ende 8 übergeht. Am hinteren Ende der Verlängerung ist in an sich bekannter Weise ein ösenartiger Lagerabschnitt für die Lagerung eines Bügels 11 ausgebildet, wobei in den Ösenabschnitt 10 ein Niet 12, welcher gleichzeitig eine Art Schwenklagerbolzen ausbildet, einsetzbar ist.

Ein Schwenkriegel 13 weist einen plattenartigen Grundkörper 14 auf, an dessen innerer Oberseite ein Hülsenansatz 15 ausgebildet ist, mit Hilfe dessen der Schwenkriegel 13 auf die Verlängerung 9 aufschiebbar ist, so dass er nach dem Einsetzen des Niets 12 und der damit verbundenen Anbringung des Bügels 11 schwenkbar festgelegt ist und zur Innenseite hin an der durch den Endabschnitt 8 gebildeten Abstufung anliegt.

An seinem inneren unteren Ende weist der Schwenkriegel 13 einen Vorsprung 16 auf, der beim Einschwenken nach innen einen Ansatz 17 zur Verriegelung des Rahmens 2 untergreift.

Der untere Teil des Rahmens 2 weist im Bereich der Teilung eine Abstufung 18 auf, durch welche eine hier sonst entstehende Sichtfuge geschlossen wird.

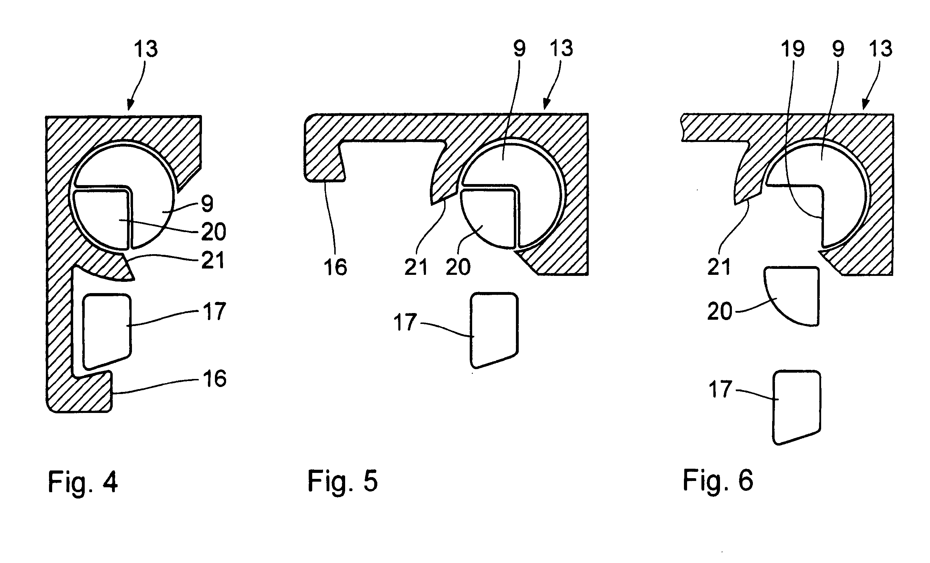

Der Vorgang der Entriegelung bzw. umgekehrt der Verriegelung wird in Verbindung mit den Fig. 4 bis 6 nachfolgend näher beschrieben, wobei es sich hierbei um Schnittdarstellungen längs der Linie IV-IV in Fig. 3 handelt.

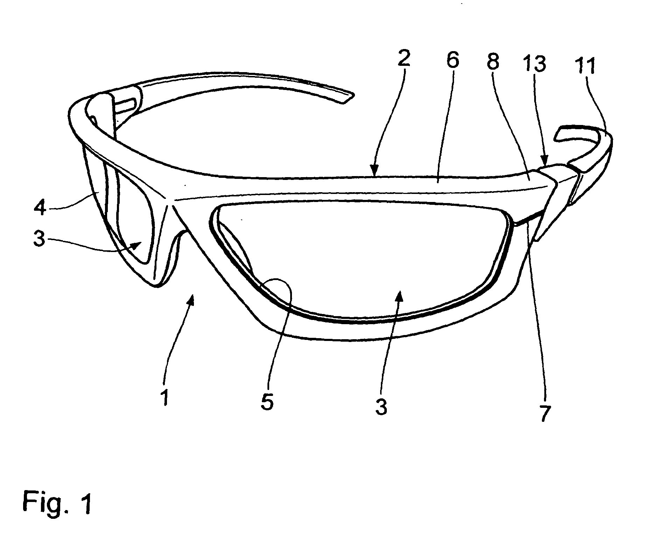

Fig. 4 zeigt den Fig. 1 entsprechenden verriegelten Zustand, bei welchem der Schwenkriegel 13 nach unten geschwenkt ist. Dabei ist erkennbar, dass die Rahmen-Verlängerung 9 eine Ausnehmung 19 mit viertelkreisartigen Querschnitt aufweist, in die ein Ansatz 20 des unteren Rahmenteils, der oberhalb der Abstufung 18 verläuft, formschlüssig einsetzbar ist. Der Schwenkriegel 13 weist eine dreiviertelkreisförmige Kontur mit einem Ansatz 21 auf, die im geschlossenen Zustand Verlängerung 9 und Ansatz 20 um- und untergreift. Darüber hinaus ist im Abstand zu dem Ansatz 21 ein weiterer Ansatz 16 vorgesehen, der im geschlossenen Zustand den Ansatz 17 untergreift.

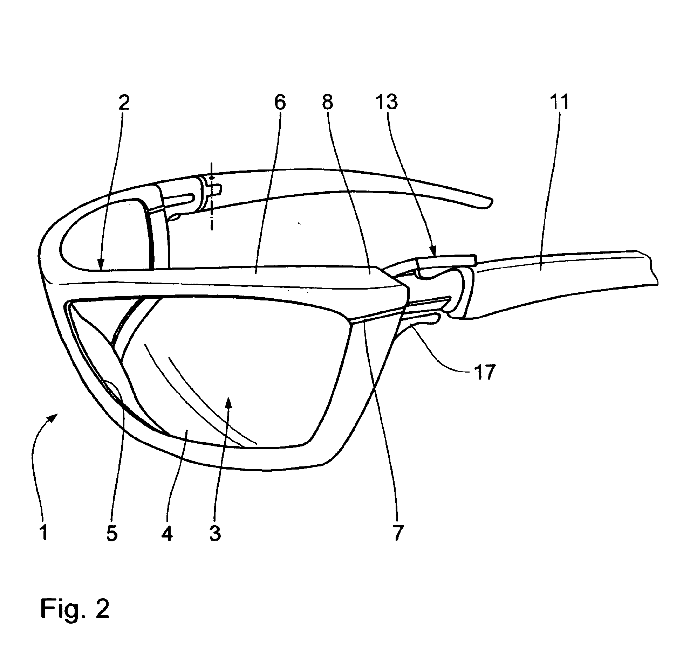

In Fig. 5 ist zum Entriegeln und zum Aufspreizen des Rahmens 2 zum Wechseln einer Scheibe 4 der Schwenkriegel 13 um 90° nach oben geschwenkt. Hierdurch wird der Ansatz 20 freigegeben und wie in Fig. 2 und Fig. 6 dargestellt, kann der Rahmen nun elastisch aufgeweitet werden, um eine Scheibe 4 zu entnehmen bzw. einzusetzen.

## Patentansprüche

1. Brille, insbesondere Arbeitsschutzbrille, umfassend einen Rahmen mit über einen Bügelansatz daran angelenkten Bügeln und zwei Sichtausnehmungen mit umlaufenden Nuten und in die Nuten eingesetzten Scheiben, wobei der Rahmen im Bereich der Sichtausnehmungen zum Aufweiten und Auswechseln der Scheiben geteilt und in der geschlossenen Stellung mittels eines Riegels verriegelbar ist, wobei der Rahmen (2) im Bereich des Bügelansatzes (9, 17) geteilt ist und der Bügelansatz (9, 17) in Verlängerung der Teilung (7) des Rahmens (2) geteilt ist in eine obere Verlängerung (9) des oberen Rahmenteils (6) und in einen unteren Ansatz (17), wobei an der oberen Verlängerung (9) des Rahmenteils (6) ein Schwenkriegel (13) schwenkbar gelagert ist, der über den unteren Ansatz (17) verrastbar ist, **dadurch gekennzeichnet, dass** der Schwenkriegel (13) einen hülsenartigen Abschnitt (15) aufweist und auf die Verlängerung (9) des oberen Rahmenteils (6) mittels dieses hülsenartigen Abschnitts (10) von hinten aufschiebbar ist.

2. Brille nach Anspruch 1, **dadurch gekennzeichnet, dass** der Schwenkriegel (13) durch die Stirnseite des Bügels (11) axial festgelegt ist.

3. Brille nach Anspruch 1, **dadurch gekennzeichnet, dass** der Schwenkriegel zur jeweiligen Scheibe hin an der Verlängerung des oberen Rahmenteils (8) durch eine Abstufung definiert gelagert ist.

4. Brille nach Anspruch 1, **dadurch gekennzeichnet, dass** der Schwenkriegel an seiner Unterseite einen Vorsprung (16) aufweist, der im verriegelten Zustand die Unterseite des Ansatzes (17) untergreift.

5. Brille nach Anspruch 4, **dadurch gekennzeichnet, dass** der Ansatz (17) einen horizontalen Schlitz aufweist.

6. Brille nach Anspruch 1, **dadurch gekennzeichnet, dass** der Schwenkriegel durch Rasten in der geöffneten Stellung festgelegt ist.

## Claims

1. Glasses, in particular industrial safety glasses, comprising a frame with side pieces which are attached thereto by a side-piece projection; and two eyeholes with encircling grooves and sight pieces inserted in the grooves; the frame being divided in the vicinity of the eyeholes for expansion and exchange of the sight pieces and, in the closed position, being lockable by a locking device; the frame (2) being divided in the vicinity of the side-piece projection (9, 17) and the side-piece projection (9, 17), in prolongation of the divided area (7) of the frame (2), being divided into a top projection (9) of the top frame member (6) and a bottom projection (17), in which a pivoted locking device (13) is pivotably mounted on the top projection (9) of the frame member (6) and lockable in place by the bottom projection (17), **characterized in that** the pivoted locking device (13) comprises an attached sleeve (15) and is slidable from behind on to the projection (9) of the top frame member (6) by means of the attached sleeve (10).

2. Glasses according to claim 1, **characterized in that** the pivoted locking device (13) is axially fixed by the front of the side piece (11).

3. Glasses according to claim 1, **characterized in that** the pivoted locking device, in a direction towards the respective sight piece, is mounted on the projection of the top frame member (8), defined by a step.

4. Glasses according to claim 1, **characterized in that** the pivoted locking device, on its bottom side, comprises a projection (16) which, in the interlocked condition, backs up from below the bottom of the projection (17).

5. Glasses according to claim 4, **characterized in that** the projection (17) comprises a horizontal slit.

6. Glasses according to claim 1, **characterized in that** the pivoted locking device is fixed in the open position by locking engagement.

## Revendications

1. Lunettes, en particulier des lunettes de protection, comportant une monture avec des branches articulées sur celle-ci par un embout à branche et deux ouvertures de visibilité, entourées d'encoches et des verres placés dans ces encoches, où la monture est divisée au niveau des ouvertures de visibilité, pour permettre l'élargissement et le changement des verres et verrouillé à l'aide d'un verrou en position fermée, où la monture (2) est divisée au niveau de la branche (9, 17) et la branche (9, 17) est divisée dans la prolongation de la division (7) de la monture (2), en une prolongation supérieure (9) de la partie supérieure de la monture (6) et un embout inférieur (17), où sur la prolongation supérieure (9) de la partie de la monture (6), est placé un verrou pivotant (13), qui vient prendre sur l'embout inférieur (17), **caractérisées en ce que** le verrouillage pivotant (13) présente une section (15) en forme de gaine et peut coulisser par l'arrière sur la prolongation (9) de la partie supérieure de la monture (6) à l'aide de cette section (10) en forme de gaine.

2. Lunettes selon la revendication 1, **caractérisées en ce que** le verrouillage pivotant (13) est fixé axialement sur la face terminale de la branche (11).

3. Lunettes selon la revendication 1, **caractérisées en ce que** le verrouillage pivotant, en direction de chacun des verres, est fixé de manière bien définie, sur la prolongation de la partie supérieure de la monture (8), par le biais d'une gradation.

4. Lunettes selon la revendication 1, **caractérisées en ce que** le verrouillage pivotant présente une saillie (16) sur sa partie inférieure, qui en position fermée, vient prendre sur la partie inférieure de l'embout (17).

5. Lunettes selon la revendication 4, **caractérisées en ce que** l'embout (17) présente une fente horizontale.

6. Lunettes selon la revendication 1, **caractérisées en ce que** le verrouillage pivotant est fixé à l'aide de crans d'arrêt en position ouverte.
